# EUROPEAN PATENT APPLICATION

(11) **EP 4 310 977 A1**
(43) Date of publication of application: **24.01.2024**
(21) Application number: 21930783.2
(22) Date of filing: 17.03.2021
(51) Int. Cl.: H01M 10/058, H01M 50/26, H01M 4/13

(54) **ELECTRODE SHEET AND PREPARATION METHOD THEREFOR, BATTERY, AND ELECTRONIC DEVICE**

(71) Applicant: Ningde Amperex Technology Limited, Zhangwan Town, Jiaocheng District Ningde City Fujian 352100 (CN)
(72) Inventor: WU, Hua, Ningde City, Fujian 352100 (CN); ZHANG, Yu, Ningde City, Fujian 352100 (CN); ZHAO, Yi, Ningde City, Fujian 352100 (CN); HE, Ping, Ningde City, Fujian 352100 (CN)
(74) Representative: Icosa
(86) International application number: PCT/CN2021/081372
(87) International publication number: WO 2022/193190

(57) **Abstract**

This application provides an electrode plate and a preparation method thereof, a battery, and an electronic apparatus, and relates to the field of energy storage technologies. The electrode plate includes a current collector and membranes disposed on a surface of the current collector, where at least one of the membranes is provided with a tab slot, the tab slot is apart from an edge of the electrode plate along a width direction, and the tab slot exposes the surface of the current collector; the membrane provided with the tab slot is provided with a notch connecting to the tab slot on a side, where the notch runs through the current collector along a direction perpendicular to the membrane, and the notch has an arc-shaped surface between two adjacent inner wall faces. In this application, the notch running through the current collector and connecting to the tab slot is formed in the electrode plate, and the notch has an arc-shaped surface between two adjacent inner wall faces. Compared with a solution that the two adjacent inner wall faces of the notch form a right angle, the arc-shaped surface can reduce the stress at a junction of the two inner wall faces, and can also prevent the formation of burrs at the junction of the two inner wall faces, thereby reducing the risk of a short circuit in the electrode assembly and improving the safety performance of the battery.

## Description

### TECHNICAL FIELD

This application relates to the field of energy storage technologies, and in particular, to an electrode plate and a preparation method thereof, a battery, and an electronic apparatus.

### BACKGROUND

The battery is an apparatus converting chemical energy into electrical energy and is widely used in fields such as new energy vehicles and energy storage power stations. A battery typically includes a housing, an electrode assembly, and an electrolyte, with the electrode assembly and the electrolyte provided in the housing. The electrode assembly includes a separator and electrode plates disposed oppositely on two sides of the separator. The two electrode plates have opposite polarities, and each electrode plate is provided with a tab slot for welding a tab. The charge and discharge functions of the battery are implemented by tabs.

In the related art, for preparation of electrode plates, generally, a larger-sized electrode plate motherboard is first prepared, with several tab slots formed on the electrode plate motherboard at spaced intervals, then the electrode plate motherboard is cut along cutting lines using a cutting mechanism into a number of electrode plates, and finally notches running through the electrode plate and connecting to the tab slots are formed in the electrode plate using a cutting mechanism.

However, in the process of cutting the electrode plate motherboard, due to the influence of cutting accuracy, an excess bare foil region can easily be formed on the electrode plate, affecting the operational performance of the battery.

### SUMMARY

In view of the foregoing problems, some embodiments of this application provide an electrode plate and a preparation method thereof, a battery, and an electronic apparatus, to avoid occurrence of an excess bare foil region on the electrode plate and ensure the operational performance of the battery.

To implement the foregoing objectives, some embodiments of this application provide the following technical solutions.

A first aspect of some embodiments of this application provides an electrode plate including a current collector and membranes disposed on a surface of the current collector.

At least one of the membranes is provided with a tab slot, where the tab slot is apart from an edge of the electrode plate, and the tab slot exposes the surface of the current collector.

The membrane provided with the tab slot is provided with a notch connecting to the tab slot, where the notch runs through the current collector along a thickness direction of the electrode plate, and the notch has an arc-shaped surface between two adjacent inner wall faces.

In some embodiments, in a width direction of the electrode plate, the electrode plate has a first side face and a second side face, the first side face and the second side face are parallel to and spaced apart from each other.

A distance from the center of the tab slot to the first side face is less than a distance from the center of the tab slot to the second side face.

The notch is provided on the first side face.

In some embodiments, a perpendicular distance D0 from a first side face of the current collector exposed in the tab slot and the notch to the first side face ranges from 1 mm to 6 mm.

In some embodiments, in the width direction of the electrode plate, a width W1 of the tab slot ranges from 5 mm to 30 mm, and in a length direction of the electrode plate, a length L1 of the tab slot ranges from 2 mm to 20 mm.

In some embodiments, in the length direction of the electrode plate, a length of the notch is equal to the length of the tab slot, and the arc-shaped surface is a side face of the current collector.

In some embodiments, in the length direction of the electrode plate, the length of the notch is greater than the length of the tab slot, and the arc-shaped surface is a side face of the membrane and the current collector.

In some embodiments, in the length direction of the electrode plate, a difference between the length L2 of a notch and a width Wt of the tab ranges from 0.5 mm to 6 mm.

In some embodiments, the electrode plate further includes an insulating film, where the insulating film covers the tab slot and the notch.

In some embodiments, a difference between a length L3 of the insulating film and the length L2 of the notch ranges from 0.5 mm to 10 mm.

A second aspect of some embodiments of this application provides a preparation method of electrode plate. The method includes the following steps:
providing an electrode plate motherboard, where the electrode plate motherboard is provided with multiple tab slots at spaced intervals;
forming multiple cutting sections on the electrode plate motherboard at spaced intervals, where the cutting sections extend along a length direction of the electrode plate motherboard, and the cutting sections are located between adjacent ones of the tab slots and apart from the tab slots;
cutting the electrode plate motherboard along the cutting sections to form a number of electrode plates; and
forming a notch connecting to the tab slot in the electrode plate, where the notch runs through a current collector of the electrode plate along a thickness direction of the electrode plate, and the notch has an arc-shaped surface between two adjacent inner wall faces.

In the foregoing preparation method of electrode plate, a distance from the cutting section to a side wall of the tab slot close to the cutting section is D1, where D1 ranges from 0.5 mm to 3 mm.

A third aspect of some embodiments of this application provides a battery including a housing and a battery cell disposed in the housing, where the battery cell includes the foregoing electrode plate.

A fourth aspect of some embodiments of this application provides an electronic apparatus including the foregoing battery.

In the electrode plate and the preparation method thereof, the battery, and the electronic apparatus provided in some embodiments of this application, the notch running through the current collector and connecting with the tab slot is formed in the electrode plate, and the notch has an arc-shaped surface between two adjacent inner wall faces. Compared with a technical solution that the two adjacent inner wall faces of the notch form a right angle, the arc-shaped surface can reduce the stress at a junction of the two inner wall faces, and can also prevent the formation of burrs at the junction of the two inner wall faces, thereby reducing the risk of a short circuit in the battery and improving the safety performance of the battery.

In addition, the tab slot is spaced apart from the edge of the electrode plateso that the tab slots are not damaged when the electrode plate motherboard is cut using a cutting mechanism, , also it avoids the occurrence of an excess bare foil region on the electrode plate, ensures the operational performance of the electrode plate, thereby ensuring the operational performance of the battery.

### BRIEF DESCRIPTION OF DRAWINGS

FIG. 1 is a first three-dimensional diagram of an electrode plate according to an embodiment of this application;
FIG. 2 is a first top view of an electrode plate according to an embodiment of this application;
FIG. 3 is a cross-sectional view along direction A-A in FIG. 2;
FIG. 4 is a second three-dimensional diagram of an electrode plate according to an embodiment of this application;
FIG. 5 is a second top view of an electrode plate according to an embodiment of this application;
FIG. 6 is a schematic structural diagram of an electrode plate and a tab according to an embodiment of this application;
FIG. 7 is a cross-sectional view along direction B-B in FIG. 6;
FIG. 8 is a schematic structural diagram of an electrode plate, a tab, and an insulating film according to an embodiment of this application;
FIG. 9 is a cross-sectional view along direction C-C in FIG. 8;
FIG. 10 is a schematic structural diagram of an electrode plate motherboard according to an embodiment of this application; and
FIG. 11 is a flowchart of a preparation method of electrode plate according to an embodiment of this application.

### Reference signs are as follows:

100. electrode plate motherboard; 110. electrode plate;
111. membrane; 112. current collector;
113. first side face; 114. second side face;
120. tab slot; 121. tab;
122. welding region; 1221. first edge;
1222. second edge; 130. cutting section;
140. notch; 141. arc-shaped surface; and
150: insulating film.

### DESCRIPTION OF EMBODIMENTS

The inventors of this application have discovered in practical work that during preparation of an electrode plate, it is necessary to first provide an electrode plate motherboard provided with tab slots, and then cut the electrode plate motherboard into a number of electrode plates using a die-cutting mechanism. This cutting process easily causes errors and damages the tab slots easily, so two slots are made in adjacent electrode plates, with one slot used for welding the tab and the other slot being idle and creating an excess bare foil region, affecting the operational performance of the electrode plate.

To resolve the foregoing problems, some embodiments of this application provide an electrode plate and a preparation method thereof, a battery, and an electronic apparatus. A tab slot is apart from an edge of the electrode plate so that the tab slot is not damaged in a process of cutting an electrode plate motherboard by using a cutting mechanism, avoiding the occurrence of an excess bare foil region on the electrode plate and ensuring the operational performance of the electrode plate, thereby ensuring the operational performance of the battery.

In addition, in some embodiments of this application, a notch running through a current collector and connecting to the tab slot is formed in the electrode plate, and the notch has an arc-shaped surface between two adjacent inner wall faces. Compared with a technical solution that the two adjacent inner wall faces of the notch form a right angle, the arc-shaped surface can reduce the stress at a junction of the two inner wall faces, and can also prevent the formation of burrs at the junction of the two inner wall faces, thereby avoiding the risk of a short circuit in the electrode assembly and improving the safety performance of the battery.

To make the foregoing purpose, features, and advantages of some embodiments of this application more obvious and understandable, the following describes the technical solutions of some embodiments of this application clearly and completely with reference to the accompanying drawings in some embodiments of this application. Apparently, the described embodiments are merely some but not all of embodiments of this application.

An embodiment of this application provides an electronic apparatus. The electronic apparatus may include a battery, where the battery is configured to supply electrical energy to the electronic apparatus. The electronic apparatus in this embodiment of this application may be a vehicle. For example, the vehicle may be a fuel vehicle, a gas vehicle, or a new energy vehicle, and the new energy vehicle may be a battery electric vehicle, a hybrid electric vehicle, an extended-range electric vehicle, or the like.

In addition, the apparatus may alternatively be another energy storage apparatus, such as a mobile phone, a portable device, a notebook computer, an electric toy, an electric tool, a ship, or a spacecraft, where the spacecraft may be an aircraft, a rocket, a space shuttle, or a spacecraft.

The battery described in this embodiment of this application is not limited to being applied to the apparatus described above. However, for brevity of description, a mobile phone is used as an example for description of the following embodiments.

For example, the mobile phone may include a mobile phone body and a battery disposed in the mobile phone body, where the battery is electrically connected to a circuit board of the mobile phone body and is configured to provide power for the circuit board, so as to ensure normal use of the mobile phone.

The battery may include a housing, an electrode assembly, and an electrolyte. The electrode assembly and the electrolyte are provided in the housing. The electrode assembly may include a separator and two electrode plates, the separator is located between the two electrode plates to implement insulation separation between the two electrode plates, and the separator may be made of PP, PE, or the like.

It should be noted that the electrode plates in this embodiment have opposite polarities, with one being a positive electrode plate and the other being a negative electrode plate, and electrical energy is provided through migration of metal ions (for example, lithium ions) between the positive electrode plate and the negative electrode plate.

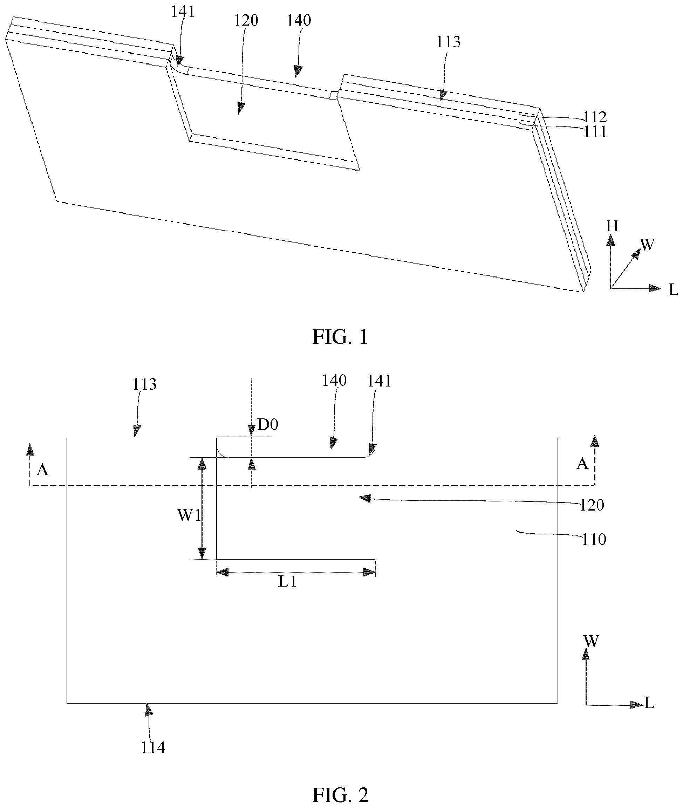

As shown in FIG. 1 to FIG. 5, an electrode plate 110 may include a current collector 112 and membranes 111 disposed on the current collector 112, where two of the membranes 111 may be bonded on an upper surface and a lower surface of the current collector 112, respectively. Under the condition that the electrode plate 110 is a positive electrode plate, the current collector 112 may be made of aluminum, and the membrane 111 may be made of a material such as lithium cobalt oxide, lithium iron phosphate, ternary lithium, or lithium manganese oxide. Under the condition that the electrode plate 110 is a negative electrode plate, the current collector 112 may be made of copper, and the membrane 111 may be made of a material such as carbon or silicon.

To implement the charge and discharge functions of the electrode assembly, a tab slot 120 is commonly provided on the electrode plate 110 for accommodating a tab. Specifically, at least one of the membranes 111 is provided with a tab slot 120, and the tab slot 120 exposes a surface of the current collector 112. This can facilitate the electrical connection between a tab and the current collector 112, so as to realize the charge and discharge functions of the battery.

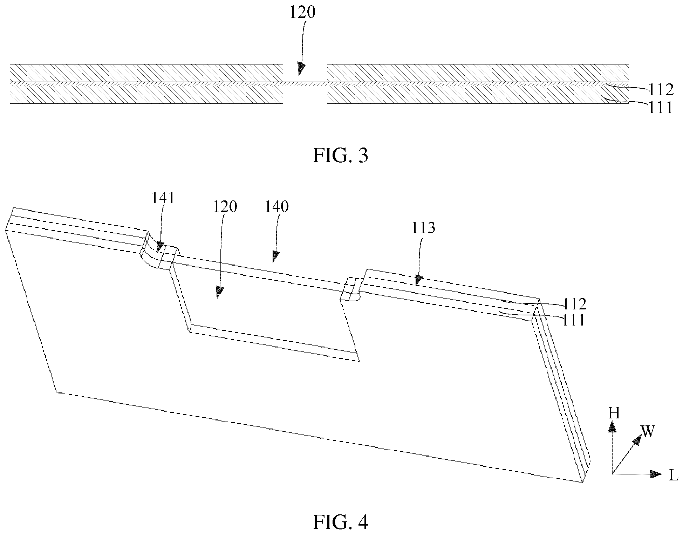

It should be noted that the number of the tab slot 120 may be one or two. Under the condition that two tab slots 120 are provided, as shown in FIG. 3, a line connecting centers of the two tab slots 120 is perpendicular to the membrane 111.

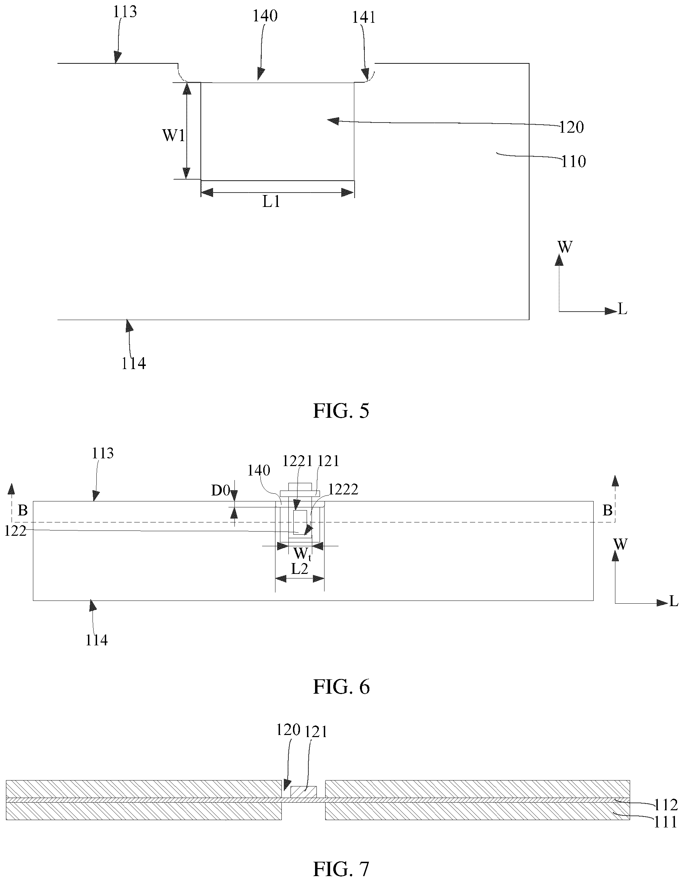

This embodiment also limits a dimension of the tab slot 120. As shown in FIG. 2 and FIG. 5, in a width direction W of the electrode plate, a width W1 of the tab slot 120 ranges from 5 mm to 30 mm, and in a length direction L of the electrode plate, a length L1 of the tab slot ranges from 2 mm to 20 mm.

If the length and width of the tab slot 120 are too large, leading to an area of the tab slot 120 being too large, which affects the energy density of the battery. If the length and width of the tab slot 120 are too small, leading to an area of the tab slot 120 being too small, which increases the difficulty in welding the tab and thus increasing the difficulty in preparing the electrode plate. Therefore, this embodiment limits the length and width of the tab slot, ensuring the energy density of the battery and reducing the difficulty in preparing the electrode plate.

In the process of preparing the electrode plate, it is necessary to cut an electrode plate motherboard 100 using a cutting mechanism to form a number of electrode plates 110. During the cutting, if the cutting is performed along one side of the tab slot 120, because the cutting accuracy of the cutting mechanism is difficult to control, the tab slot 120 is prone to be damaged, decreasing the yield of the electrode plates 110.

Therefore, in this embodiment, the tab slot 120 is apart from an edge of the electrode plate 110, which means that the tab slot 120 is located inside the electrode plate 110. In this way, the tab slots are not prone to be damaged during the formation of the electrode plates 110, which increases the yield of the electrode plates.

It should be noted that in this embodiment, the edge of the electrode plate 110 may be an edge of the electrode plate 110 in the width direction W. The orientation shown in FIG. 2 is used as an example. The edge of the electrode plate 110 in the width direction W may be an upper edge and a lower edge of the electrode plate.

Specifically, as shown in FIG. 2, in the width direction of the electrode plate, that is, direction W in FIG. 2, the electrode plate 110 has a first side face 113 and a second side face 114, the first side face and the second side face being parallel to and apart from each other. A distance from the center of the tab slot 120 to the first side face 113 is less than a distance from the center of the tab slot 120 to the second side face 114. In other words, the tab slot 120 is not located at the center position of the electrode plate 110 in the width direction W.

In the subsequent preparation of the electrode assembly, as shown in FIG. 6 and FIG. 7, a tab 121 needs to be welded in the tab slot 120, and the tab 121 is extended beyond the first side face 113 along the width direction W of the electrode plate. In this embodiment, the distance from the center of the tab slot 120 to the first side face 113 is less than the distance from the center of the tab slot 120 to the second side face 114, such that a dimension of the tab 121 in the width direction W of the electrode plate can be shortened, reducing the preparation cost of the tab and decreasing the resistance of the tab, thereby improving the charge and discharge efficiency of the electrode assembly.

As shown in FIG. 6, the tab slot 120 is provided with a tab 121 inside, in other words, the tab 121 can be disposed in the tab slot 120 through welding, and a welding region 122 is formed in the tab slot 120. In the width direction W of the electrode plate, the welding region 122 has a first edge 1221 and a second edge 1222, the first edge 1221 and the second edge 1222 being disposed opposite each other. The first edge 1221 is adjacent to the first side face 113, and a distance from the first edge 1221 to the edge of the tab slot 120 adjacent to the second side face 114 ranges from 4.5 mm to 15 mm. This facilitates the welding of the tab.

The electrode plate 110 is further provided with a notch 140. The notch 140 may be provided on a side face of the membrane 111 on which the tab slot 120 is located. The notch 140 communicates with the tab slot 120, runs through the current collector along a direction perpendicular to the membrane 111, and exposes a side face of the current collector 112. In the process of welding the tab 121 in the tab slot 120, one end of the tab may extend to the outside of the electrode plate 110 through the notch. In this way, the tab does not increase a thickness of the electrode plate located between the tab slot and the edge of the electrode plate, ensuring the thickness uniformity of the electrode plate, and thus ensuring the performance uniformity of the electrode plate.

It should be noted that the notch 140 may be provided on any side face of the membrane 111 on which the tab slot 120 is located. For example, the notch 140 may be provided on the first side face 113. This shortens the dimension of the tab in the width direction W of the electrode plate, reduces the preparation cost of the tab and decreases the resistance of the tab, thereby improving the charge and discharge efficiency of the battery.

Still referring to FIG. 2, a perpendicular distance D0 from the side face of the current collector 112 exposed in the tab slot 120 and the notch 140 to the first side face 113 ranges from 1 mm to 6 mm. In other words, in the width direction of the electrode plate, a perpendicular distance D0 from an edge of the tab slot 120 close to the notch 140 to the first side face 113 ranges from 1 mm to 6 mm. In this way, the tab slot is disposed at a specified distance from the first side face, such that the tab slot is not damaged in the process of cutting the electrode plate motherboard, it increases the yield of the electrode plates.

In this embodiment, the perpendicular distance D0 from the side face of the current collector 112 exposed in the tab slot 120 and the notch 140 to the first side face 113 is limited to avoid D0 being too large or too small.

If D0 is too large, the cost of subsequent removal of the electrode plate located between the tab slot 120 and the first side face 113 is increased, a length of the tab 121 welded in the tab slot 120 is also increased, the resistance of the tab is increased, and the charge and discharge efficiency of the battery is reduced. If D0 is too small, in the process of cutting the electrode plate motherboard into the electrode plates, the tab slot is prone to be damaged, thereby decreasing the yield of the electrode plates. Therefore, in this embodiment, the perpendicular distance D0 from the side face of the current collector exposed in the tab slot and the notch to the first side face is limited, which not only increases the yield of the electrode plates, but also improves the charge and discharge efficiency of the battery.

The notch 140 has an arc-shaped surface 141 between two adjacent inner wall faces. Compared with a technical solution that the two adjacent inner wall faces of the notch form a right angle, the arc-shaped surface 141 can reduce the stress at a junction of the two inner wall faces, and prevent the electrode plates from being damaged, increasing the yield of the electrode plates. In addition, the arc-shaped surface 141 can also prevent the formation of burrs at the junction of the two inner wall faces, thereby reducing the risk of a short circuit in the electrode assembly caused by burrs piercing the separator, and improving the safety performance of the battery.

A relationship between the dimension of the notch 140 and the dimension of the tab slot 120 can be described in two embodiments as follows. It should be noted that the following two embodiments merely show examples of two feasible embodiments, and do not limit the relationship between the dimension of the notch and the dimension of the tab slot.

As shown in FIG. 1 and FIG. 2, in one embodiment, in the length direction of the electrode plate, which is also the direction L shown in FIG. 2, a length of the notch 140 is equal to the length of the tab slot 120. This can simplify the preparation process of the notch 140.

Under the condition that the length of the notch 140 is equal to the length of the tab slot 120, the arc-shaped surface 141 is formed on the side face of the current collector 112. A groove running through the current collector in a width direction of the tab is formed in the current collector, where wall faces of the groove include a first wall face, second wall face, and third wall face sequentially connected, and an arc-shaped surface is presented between the first wall face and the second wall face and between the second wall face and third wall face.

In this embodiment, the arrangement of the arc-shaped surface can reduce the stress between the first wall face and the second wall face and the stress between the second wall face and the third wall face, prevent the current collector from being damaged, and increase the yield of the electrode plates. In addition, the arc-shaped surface can also prevent the formation of burrs between the first wall face and the second wall face and between the second wall face and the third wall face, thereby reducing the risk of a short circuit in the electrode assembly caused by the burrs piercing the separator, and improving the safety performance of the battery.

In another embodiment, as shown in FIG. 4, in the length direction L of the electrode plate, the length of the notch 140 is greater than the length of the tab slot 120. This is because in the process of actually forming the notch, it is difficult to strictly ensure that the dimension of the notch is exactly equal to the dimension of the tab slot. Therefore, in this embodiment, the length of the notch 140 is greater than the length of the tab slot 120, which can facilitate the preparation of the notch 140 and reduce the difficulty in preparing the notch 140.

Under the condition that the length of the notch 140 is greater than the length of the tab slot 120, the arc-shaped surface 141 is a side face of the membrane 111 and a side face of the current collector 112. In other words, one portion of the notch 140 is formed on the current collector 112, and the other portion of the notch 140 is formed on the current collector 112 and the membrane 111. This can reduce the damage to the membrane during the formation of the notch and eliminate the burrs formed on the membrane, improving the safety performance of the battery.

This embodiment also limits the notch based on the dimension of the tab welded in the tab slot. For example, in the length direction L of the electrode plate, a difference between the length L2 of the notch and a width Wt of the tab ranges from 0.5 mm to 6 mm, where the width direction of the tab is consistent with the length direction of the electrode plate.

If the length L2 of the notch and the width Wt of the tab are too large, the area of the current collector 112 is decreased, affecting the performance of the electrode plate. If the length L2 of the notch and the width Wt of the tab are too small, the tab 121 overlaps on the electrode plate 110, increasing a thickness of the electrode plate located between the tab slot 120 and the edge of the electrode plate, which is difficult to ensure the thickness uniformity of the electrode plate. Therefore, this embodiment further limits the dimension of the notch and the dimension of the tab, preventing the length L2 of the notch and the width Wt of the tab from being too large and also preventing the length L2 of the notch and the width Wt of the tab from being too small. This ensures the thickness uniformity of the electrode plate and facilitates the welding of the tab.

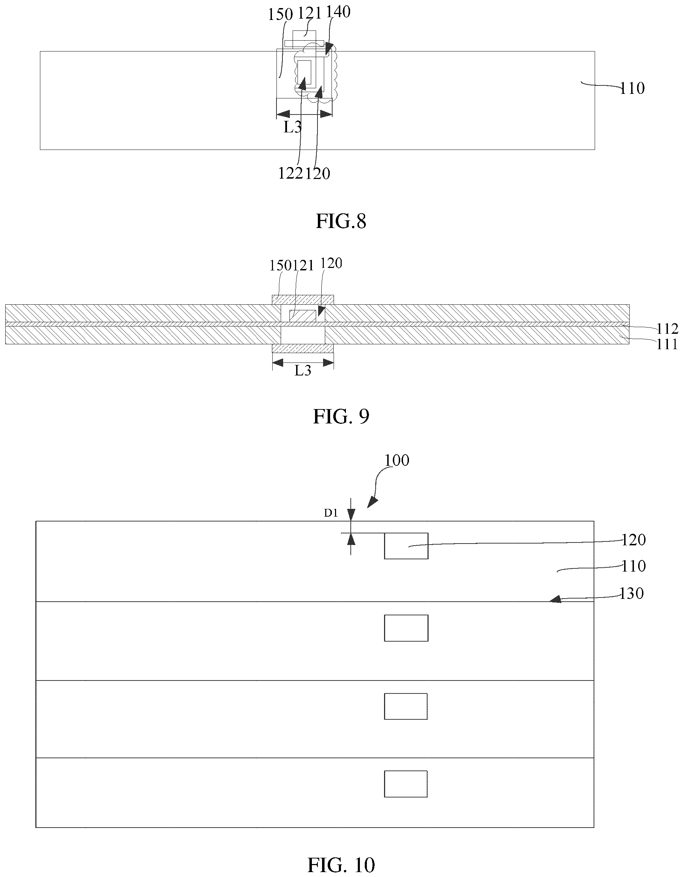

In some embodiments, as shown in FIG. 8 and FIG. 9, the electrode plate 110 provided in this embodiment further includes an insulating film 150. The insulating film 150 covers the tab slot 120 and the notch 140 and is used to cover and seal the tab slot 120 and the notch 140, so as to provide protection for the tab 121 in the tab slot 120. The insulating film 150 may include a protective tape.

In this embodiment, a difference between a length L3 of the insulating film and the length L2 of the notch ranges from 0.5 mm to 10 mm. If the length L3 of the insulating film is too large, an area of the insulating film 150 is increased, affecting the performance of the electrode plate. If the length L3 of the insulating film is too small, a gap is prone to present between the insulating film 150 and the notch 140, which is easy to allow active materials in one electrode plate to diffuse into another electrode plate and make the active materials accumulate at the tab of the another electrode plate, affecting the performance of the electrode plate. Therefore, this embodiment limits the difference between the length L3 of the insulating film and the length L2 of the notch, ensuring the performance of the electrode plate and ensuring the protective function of the insulating film.

Furthermore, the difference between the length L3 of the insulating film and the length L2 of the notch may also range from 0.5 mm to 5 mm, preventing the length L3 of the insulating film from being too large and improving the performance of the electrode plate.

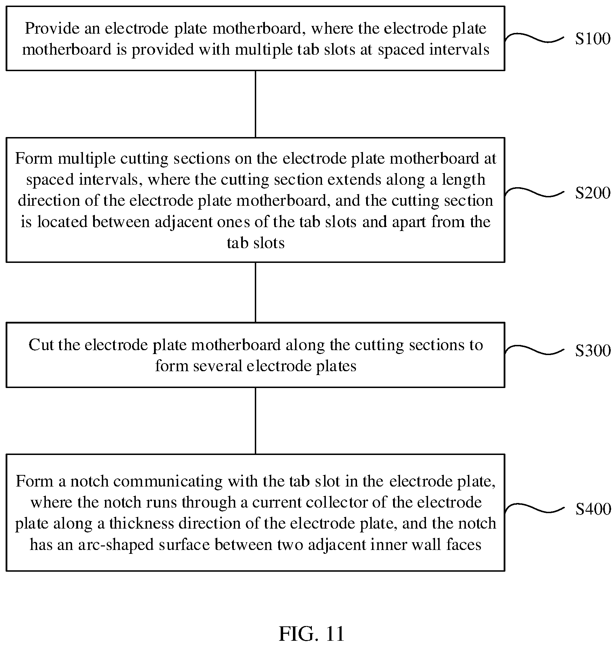

As shown in FIG. 10 and FIG. 11, an embodiment of this application further provides a preparation method of electrode plate for preparing the electrode plate described in the foregoing embodiments. The method mainly includes the following steps:

Step S100: Provide an electrode plate motherboard, where the electrode plate motherboard is provided with multiple tab slots at spaced intervals.

For example, an electrode plate motherboard 100 with membranes and a current collector is provided, multiple tab slots 120 are formed in the electrode plate motherboard 100, and the multiple tab slots 120 can be disposed along a width direction of the electrode plate motherboard 100 at spaced intervals, with the centers of the multiple tab slots 120 located on one straight line.

Step S200: Form multiple cutting sections on the electrode plate motherboard at spaced intervals, where the cutting sections extend along a length direction of the electrode plate motherboard, and the cutting sections are located between adjacent ones of the tab slots and apart from the tab slots.

For example, the cutting section 130 may be a cutting line extending along the length direction of the electrode plate motherboard 100 or a cutting slot extending along the length direction of the electrode plate motherboard 100. The cutting section 130 is apart from the tab slot 120, such that in subsequent processes, when the electrode plate motherboard 100 is cut along the cutting sections 130, the tab slots 120 are not damaged, increasing the yield of the electrode plates.

Furthermore, a distance from the cutting section 130 to a side wall of the tab slot 120 close to the cutting section 130 is D1. The orientation shown in FIG. 10 is used as an example. The distance from the cutting line to the upper side wall of the tab slot 120 is D1, where D1 ranges from 0.5 mm to 3 mm.

If D1 is too large, the cost of subsequent removal of the electrode plate located between the tab slot 120 and the first side face 113 is increased, a length of a tab 121 welded in the tab slot 120 is increased, the resistance of the tab is increased, and the charge and discharge efficiency of the battery is reduced; and if D1 is too small, in the process of cutting the electrode plate motherboard into the electrode plates, the tab slot is prone to be damaged, decreasing the yield of the electrode plates. Therefore, in this embodiment, the distance between the cutting line and an upper side wall of the tab slot is limited, which not only increases the yield of the electrode plates, but also improves the charge and discharge efficiency of the battery.

Step S300: Cut the electrode plate motherboard along the cutting sections to form a number of electrode plates.

The electrode plate motherboard 100 is cut along the cutting sections 130 using a cutting mechanism to form a number of electrode plates 110.

Step S400: Form a notch communicating with the tab slot in the electrode plate, where the notch runs through a current collector of the electrode plate along a thickness direction of the electrode plate, and the notch has an arc-shaped surface between two adjacent inner wall faces.

As shown in FIG. 1 and FIG. 4, with the cutting tool mentioned above, a portion of the electrode plate between the tab slot 120 and the upper edge of the electrode plate 110 is cut off to form a notch 140 in the electrode plate 110 to prevent an increase in the thickness of the electrode plate 110 at the tab 121 in subsequent welding of the tab 121.

In this embodiment, the notch 140 runs through the current collector 112 along the thickness direction of the electrode plate 110, and the notch 140 has an arc-shaped surface 141 between two adjacent inner wall faces. In this embodiment, the arrangement of the arc-shaped surface can reduce the stress between the first wall face and the second wall face of the notch and the stress between the second wall face and the third wall face of the notch, prevent the current collector from being damaged, and increase the yield of the electrode plates. In addition, the arc-shaped surface can also prevent the formation of burrs between the first wall face and the second wall face and between the second wall face and the third wall face, thereby reducing the risk of a short circuit in the electrode assembly caused by burrs piercing the separator, and improving the safety performance of the battery.

Various embodiments or implementations in this specification are described in a progressive manner, each embodiment focuses on the difference from other embodiments, and the same and similar parts between various embodiments may refer to each other.

In the description of this specification, reference to the description of the terms "an implementation", "some implementations", "an example of the implementation", "an example", "a specific example", or "some examples" means that particular features, structures, materials or characteristics described in connection with the implementations or examples are included in at least one implementation or example of this application. In this specification, descriptions of examples of the above terms do not necessarily refer to the same embodiment or example. Furthermore, the particular features, structures, materials, or characteristics described may be combined in a suitable manner in any one or more embodiments or examples.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of some embodiments of this application.

## Claims

1. An electrode plate, comprising a current collector and membranes disposed on a surface of the current collector, wherein
at least one of the membranes is provided with a tab slot, wherein the tab slot is apart from an edge of the electrode plate, and the tab slot exposes the surface of the current collector; and
the membrane provided with the tab slot is provided with a notch connecting to the tab slot, wherein the notch runs through the current collector along a thickness direction of the electrode plate, and the notch has an arc-shaped surface between two adjacent inner wall faces.

2. The electrode plate according to claim 1, wherein in a width direction of the electrode plate, the electrode plate has a first side face and a second side face, the first side face and the second side face are being parallel to and apart from each other;
a distance from the center of the tab slot to the first side face is less than a distance from the center of the tab slot to the second side face; and
the notch is provided on the first side face.

3. The electrode plate according to claim 2, wherein a perpendicular distance D0 from a side face of the current collector exposed in the tab slot and the notch to the first side face ranges from 1 mm to 6 mm.

4. The electrode plate according to claim 3, wherein in the width direction of the electrode plate, a width W1 of the tab slot ranges from 5 mm to 30 mm; and
in a length direction of the electrode plate, a length L1 of the tab slot ranges from 2 mm to 20 mm.

5. The electrode plate according to any one of claims 1 to 4, wherein in a length direction of the electrode plate, a length of the notch is equal to the length of the tab slot, and the arc-shaped surface is a side face of the current collector.

6. The electrode plate according to any one of claims 1 to 4, wherein in the length direction of the electrode plate, a length of the notch is greater than the length of the tab slot, and the arc-shaped surface is a side face of the membrane and a side face of the current collector.

7. The electrode plate according to claim 6, wherein in the length direction of the electrode plate, a difference between the length L2 of the notch and a width Wt of the tab ranges from 0.5 mm to 6 mm.

8. The electrode plate according to claim 7, wherein the electrode plate further comprises an insulating film, the insulating film covering the tab slot and the notch.

9. The electrode plate according to claim 8, wherein a difference between a length L3 of the insulating film and the length L2 of the notch ranges from 0.5 mm to 10 mm.

10. A battery, comprising a housing and a battery cell disposed in the housing, wherein the battery cell comprises the electrode plate according to any one of claims 1 to 9.

11. An electronic apparatus, comprising the battery according to claim 10.

12. A preparation method of electrode plate, comprising the following steps:
providing an electrode plate motherboard, wherein the electrode plate motherboard is provided with multiple tab slots at spaced intervals;
forming multiple cutting sections on the electrode plate motherboard at spaced intervals, wherein the cutting sections extend along a length direction of the electrode plate motherboard, and the cutting sections are located between adjacent ones of the tab slots and apart from the tab slots;
cutting the electrode plate motherboard along the cutting sections to form a number of electrode plates; and
forming a notch connecting to the tab slot in the electrode plate, wherein the notch runs through a current collector of the electrode plate along a thickness direction of the electrode plate, and the notch has an arc-shaped surface between two adjacent inner wall faces.

13. The preparation method of electrode plate according to claim 12, wherein a distance from the cutting section to a side wall of the tab slot close to the cutting section is D1, and D1 ranges from 0.5 mm to 3 mm.
